# EUROPEAN PATENT SPECIFICATION

(11) **EP 3 290 487 B1**
(45) Date of publication and mention of the grant of the patent: **31.08.2022**
(21) Application number: 16786485.9
(22) Date of filing: 26.04.2016
(51) Int. Cl.: C09D 183/00, B01J 27/10, B01J 31/22, B01J 37/04, B32B 9/00, C03C 17/30, C09K 3/18

(54) **ANTIFOULING COMPOSITION, ANTIFOULING SHEET AND METHOD FOR PRODUCING ANTIFOULING SHEET**
BEWUCHSHEMMENDE ZUSAMMENSETZUNG, BEWUCHSHEMMENDE FOLIE UND VERFAHREN ZUR HERSTELLUNG EINER BEWUCHSHEMMENDEN FOLIE
COMPOSITION ANTISALISSURE, FEUILLE ANTISALISSURE ET PROCÉDÉ PERMETTANT DE PRODUIRE UNE FEUILLE ANTISALISSURE

(30) Priority: 30.04.2015 JP 2015093135
(43) Date of publication of application: 07.03.2018
(73) Proprietor: Lintec Corporation, Tokyo 173-0001 (JP)
(72) Inventor: HIRONAGA, Maki, Tokyo 173-0001 (JP); MIYATA, Sou, Tokyo 173-0001 (JP); ONO, Yoshitomo, Tokyo 173-0001 (JP)
(74) Representative: Gille Hrabal Partnerschaftsgesellschaft mbB Patentanwälte
(86) International application number: PCT/JP2016/063071
(87) International publication number: WO 2016/175208

(56) References cited:
- WO-A1-2006/133677
- JP-A- 2009 084 476
- JP-A- 2013 129 724
- JP-A- 2016 044 533
- JP-B2- 4 957 926
- US-A1- 2012 168 649

## Description

### Technical Field

The present invention relates to an antifouling composition, an antifouling sheet including an antifouling layer formed of the antifouling composition, and a method for producing the same.

### Background Art

In general, it is desirable that water droplets, stains, and so on that may hinder vision do not adhere to the surfaces of windows for buildings, windows for automobiles, windshields for cars, airplanes, ships, and so on, undersea lives adhesion preventing films for aquariums, ship bottom windows, or ship bottoms, road panels, such as soundproof walls, mirrors installed in bathrooms, and so on, and molded articles, such as glass chambers, and glass accessories.

By coating the surfaces of such molded articles with a coating film formed of an antifouling substance, or by sticking an antifouling sheet thereto, the surfaces are given water repellency or antifouling properties.

For example, PTL 1 discloses a water-repellent film-coated article, in which glass or the like serving as a substrate is coated with a laminate having an underlayer formed of an inorganic compound and a water-repellent film formed of a fluorine-containing compound, which coats the surface of the underlayer. Prior art JP 2009/084476 A discloses a room temperature-curable coating composition which exhibits levelling properties when it is applied to a ground substrate, hardly causes a film defect, and can easily form a transparent coating film having high adhesion with the ground substrate. Prior art WO 2006/133677 A) discloses an alkali-stable sol-gel coating. US 2012/168649 relates to a near-infrared shielding coating agent curable at ordinary temperatures.

### Citation List

### Patent Literature

PTL 1: JP 2010-285574A

### Summary of Invention

### Technical Problem

However, the water-repellent film-coated article described in PTL 1 has a water-repellent film formed of a fluorine-containing compound and is therefore unfavorable from the viewpoint of environmental protection.

In addition, in many cases, the antifouling sheet is generally used in the outdoor or the like, and it involves such problems that reduction of weather resistance which may be caused by being exposed in the outdoor for a long period of time, for example, a crack is generated in the antifouling layer, whereby the appearance of the surface of the antifouling layer is deteriorated due to progress of the crack; and that antifouling properties of the antifouling layer are reduced by long-term outdoor exposure. Furthermore, the antifouling layer that gives water repellency or antifouling properties is also required that the surface state or curability of the layer is favorable.

An object of the present invention is to provide an antifouling composition which may become a forming material of an antifouling layer with favorable surface state and curability and having excellent weather resistance, an antifouling sheet having an antifouling layer formed of the antifouling composition, and a method for producing the same.

### Solution to Problem

The present inventors have found that an antifouling composition including a tetrafunctional silane-based compound having a specified structure, a trifunctional silane-based compound having a specified structure, and a metal catalyst of a specified kind is able to solve the aforementioned problem, leading to accomplishment of the present invention.

Specifically, the present invention provides the following [1] to [18].
[1] An antifouling composition including:
   a tetrafunctional silane-based compound (A) represented by the following formula (a):

      Formula (a): Si(OR¹)ₚ(X¹)₄₋ₚ

      wherein,
   R¹ represents an alkyl group having 1 to 6 carbon atoms; X¹ represents a halogen atom; when plural R¹s and X¹s are present, the plural R¹s and X¹s may be the same as or different from each other; and p represents an integer of 0 to 4,
   a trifunctional silane-based compound (B) represented by the following formula (b):

      Formula (b): R²Si(OR³)_{q}(X²)_{3-q}

      wherein,
   R² represents an alkyl group having 1 to 3 carbon atoms; R³ represents an alkyl group having 1 to 6 carbon atoms; X² represents a halogen atom; when plural R³s and X²s are present, the plural R³s and X²s may be the same as or different from each other; and q represents an integer of 0 to 3, and
   a metal catalyst (C) containing a titanium atom, which does not require light irradiation for revealing a catalytic action, wherein the total content of the component (A), the component (B), and component (C) is 65% by mass or more relative to the total amount (100 % by mass of the solids content) of the antifouling composition.
[2] The antifouling composition as set forth above in [1], wherein a blending ratio (molar ratio) of the component (A) and the component (B) [(A)/(B)] is 0.01 or more and 10.00 or less.
[3] The antifouling composition as set forth above in [1] or [2], wherein R³ in the formula (b) is a methyl group.
[4] The antifouling composition as set forth above in [3], wherein a blending ratio (molar ratio) of the component (A) and the component (B) [(A)/(B)] is 0.05 or more and 5.00 or less.
[5] The antifouling composition as set forth above in [1] or [2], wherein R³ in the formula (b) is an ethyl group.
[6] The antifouling composition as set forth above in [5], wherein a blending ratio (molar ratio) of the component (A) and the component (B) [(A)/(B)] is 0.10 or more and 7.00 or less.
[7] The antifouling composition as set forth above in any of [1] to [6], wherein the content of the component (C) is 0.010 to 50.000 mol% based on 100 mol% of the sum total of the component (A) and the component (B).
[8] The antifouling composition as set forth above in any of [1] to [7], wherein the component (C) includes one or more selected from a titanium alkoxide, a titanium chelate, a titanium acylate, an acetoacetate complex of aluminum, an acetylacetonate complex of aluminum, a zinc-chromium oxide, a zinc-aluminum oxide, a zinc-aluminum-chromium oxide, a zinc-chromium-manganese oxide, a zinc-iron oxide, and a zinc-iron-aluminum oxide.
[9] The antifouling composition as set forth above in any of [1] to [8], wherein the total content of the component (A), the component (B), and the component (C) is 50% by mass or more based on 100% by mass of the total amount of the antifouling composition.
[10] The antifouling composition as set forth above in any of [1] to [9], further including an acid catalyst (D).
[11] The antifouling composition as set forth above in [10], wherein the component (D) includes one or more selected from the group consisting of hydrochloric acid, phosphoric acid, acetic acid, formic acid, sulfuric acid, methanesulfonic acid, oxalic acid, p-toluenesulfonic acid, and trifluoroacetic acid.
[12] An antifouling sheet including an antifouling layer formed of the antifouling composition as set forth above in any of [1] to [11].
[13] The antifouling sheet as set forth above in [12], including the antifouling layer on a substrate.
[14] The antifouling sheet as set forth above in [12], which has a configuration in which the antifouling layer is sandwiched between two release materials.
[15] The antifouling sheet as set forth above in any of [12] to [14], further including a pressure sensitive adhesive layer.
[16] The antifouling sheet as set forth above in any of [12] to [15], wherein the thickness of the antifouling layer is 40 µm or less.
[17] A method for producing an antifouling sheet, including the following steps (1) and (2):
   Step (1): a step of preparing an antifouling composition including:
      a tetrafunctional silane-based compound (A) represented by the following formula (a):

         Formula (a): Si(OR¹)ₚ(X¹)₄₋ₚ

         wherein,
      R¹ represents an alkyl group having 1 to 6 carbon atoms; X¹ represents a halogen atom; when plural R¹s and X¹s are present, the plural R¹s and X¹s may be the same as or different from each other; and p represents an integer of 0 to 4,
      a trifunctional silane-based compound (B) represented by the following formula (b):

         Formula (b): R²Si(OR³)_{q}(X²)_{3-q}

         wherein,
      R² represents an alkyl group having 1 to 3 carbon atoms; R³ represents an alkyl group having 1 to 6 carbon atoms; X² represents a halogen atom; when plural R³s and X²s are present, the plural R³s and X²s may be the same as or different from each other; and q represents an integer of 0 to 3, and
      a metal catalyst (C) containing a titanium atom, which does not require light irradiation for revealing a catalytic action, wherein the total content of the component (A), the component (B), and component (C) is 65% by mass or more relative to the total amount (100 % by mass of the solids content) of the antifouling composition, and
   Step (2): a step of coating the antifouling composition on a substrate or a release material, followed by drying to form an antifouling layer.
[18] An antifouling sheet obtained by the production method as set forth above in [17].

### Advantageous Effects of Invention

In accordance with the present invention, it is able to provide an antifouling composition which may become a forming material of an antifouling layer with favorable surface state and curability and having excellent weather resistance, an antifouling sheet having an antifouling layer formed of the antifouling composition, and a method for producing the same.

### Brief Description of Drawings

Fig. 1 illustrates cross-sectional views of antifouling sheets each having a substrate, as an embodiment of the present invention.
Fig. 2 illustrates cross-sectional views of antifouling sheets each not having a substrate, as an embodiment of the present invention.

### Description of Embodiments

### [Antifouling Composition]

The antifouling composition of the present invention is described in appended claim 1. It includes a tetrafunctional silane-based compound (A) represented by the formula (a), a trifunctional silane-based compound (B) represented by the formula (b), and a metal catalyst (C) containing a titanium atom, which does not require light irradiation for revealing a catalytic action.

Preferably, the antifouling composition of the present invention further includes an acid catalyst (D) and may contain any other additives than the components (A) to (D) within a range where the advantageous effects of the present invention are not impaired.

The antifouling layer formed of the antifouling composition of the present invention is favorable in surface state and curability and excellent in weather resistance.

The antifouling layer is formed in view of the fact that a condensation reaction between the silane-based compounds in the antifouling composition proceeds to form a polymer. The present inventors have conjectured that a structure of the polymer obtained through a reaction between the silane-based compounds contains the unreacted alkoxy groups in the units derived from the component (A) and the component (B) remaining in the antifouling layer immediately after the formation (OR¹ in the formula (a) and OR³ in the formula (b)) and an uncondensed silanol group resulting from hydrolysis of the aforementioned alkoxy groups (hereinafter, the both will be also combined and referred to simply as "uncondensed site"), a reaction of the uncondensed site gradually proceeds due to long-term outdoor exposure, resulting in cure shrinkage, and a strain is generated in the antifouling layer, thereby promoting generation and progress of a crack.

On the basis of the foregoing conjecture, the present inventors have found that the antifouling layer with excellent weather resistance is obtained by minimizing the presence of the uncondensed site remaining in the antifouling layer immediately after the formation as far as possible.

More specifically, in order that the condensation reaction between the silane-based compounds may commence, it is necessary that at the commencement of reaction, the alkoxy groups in the component (A) and the component (B) (OR¹ in the formula (a) and OR³ in the formula (b)) are desorbed upon a reaction with water and substituted into a hydroxyl group. Then, the present inventors have considered that by regulating the alkyl groups which the alkoxy groups in the component (A) and the component (B) have (R¹ in the formula (a) and R³ in the formula (b)) to alkyl groups having a specified carbon number, the foregoing reaction is promoted, whereby an antifouling layer which is few in the uncondensed site and high in crosslinking density is obtained. Then, the present inventors have found that by controlling the carbon number of the alkyl groups, an antifouling layer in which even after the long-term outdoor exposure, the generation and progress of a crack are suppressed (hereinafter also referred to simply as "crack suppressing effect") and which is few in lowering of water repellency before and after the exposure (hereinafter also referred to simply as "water repellency maintaining effect") is obtained.

In addition, the present inventors have found that by further controlling the carbon number of the alkyl group in the unit derived from the component (B) (R² in the formula (b)) within a range of a specified value, an antifouling layer which is more excellent in curability and has excellent crack suppressing effect and water repellency maintaining effect is obtained.

Each of the components which are included in the antifouling composition of the present invention is hereunder described.

### <Component (A): Tetrafunctional Silane-based Compound represented by Formula (a)>

The antifouling composition of the present invention includes a tetrafunctional silane-based compound (A) represented by the following formula (a):

Formula (a): Si(OR¹)ₚ(X¹)₄₋ₚ

wherein,
R¹represents an alkyl group having 1 to 6 carbon atoms; X¹ represents a halogen atom; when plural R¹s and X¹s are present, the plural R¹s and X¹s may be the same as or different from each other; and p represents an integer of 0 to 4.

The component (A) may be constituted of only one compound or may be constituted of two or more compounds represented by the formula (a).

Examples of the alkyl group which may be selected as R¹ include a methyl group, an ethyl group, a n-propyl group, an isopropyl group, a n-butyl group, a s-butyl group, an isobutyl group, a t-butyl group, a n-pentyl group, a n-hexyl group, a neopentyl group, a methylpentyl group, and the like. Among them, from the viewpoint of obtaining more favorable curability, a methyl group, an ethyl group, and a n-propyl group are preferred, and a methyl group and an ethyl group are more preferred.

Although the alkyl group which may be selected as R¹ may be either linear or branched, it is preferably linear.

As the halogen atom which may be selected as X¹, a chlorine atom, a bromine atom, or an iodine atom is preferred, and a chlorine atom is more preferred.

The silane-based compound represented by the formula (a) may be used alone or in combination of two or more thereof.

Preferably, the component (A) includes a silane-based compound represented by the formula (a) wherein p is 4.

### <Component (B): Trifunctional Silane-based Compound represented by Formula (b)>

The antifouling composition of the present invention includes a trifunctional silane-based compound (B) represented by the following formula (b) together with the tetrafunctional silane-based compound (A) represented by the formula (a):

Formula (b): R²Si(OR³)_{q}(X²)_{3-q}

wherein,
R² represents an alkyl group having 1 to 3 carbon atoms; R³ represents an alkyl group having 1 to 6 carbon atoms; X² represents a halogen atom; when plural R³s and X²s are present, the plural R³s and X²s may be the same as or different from each other; and q represents an integer of 0 to 3.

The component (B) may be constituted of only one compound or may be constituted of two or more compounds represented by the formula (b).

The carbon number of the alkyl group which may be selected as R² is 1 to 3.

When the carbon number of the foregoing alkyl group exceeds 3, the antifouling layer formed of the resulting antifouling composition is interior in curability, water repellency maintaining effect, and crack suppressing effect. In addition, as the carbon number of the foregoing alkyl group increases, the resulting antifouling composition is liable to be gelled, and the surface state of the antifouling layer formed of the foregoing antifouling composition also tends to be deteriorated.

Examples of the alkyl group which may be selected as R² include a methyl group, an ethyl group, a n-propyl group, and an isopropyl group. From the viewpoint of curability of the antifouling layer, a methyl group and an ethyl group are preferred, and from the viewpoint of obtaining a more favorable crack suppressing effect, a methyl group is more preferred.

As the alkyl group which may be selected as R³ and the halogen atom which may be selected as X², the same alkyl groups which may be selected as R¹ and halogen atoms which may be selected as X¹ in the formula (a) are exemplified.

The trifunctional silane-based compound represented by the formula (b) may be used alone or in combination of two or more thereof.

Preferably, the component (B) includes a trifunctional silane-based compound represented by the formula (b) wherein q is 3.

In the antifouling composition of the present invention, a blending ratio (molar ratio) of the tetrafunctional silane-based compound (A) and the trifunctional silane-based compound (B) [(A)/(B)] is preferably 0.01 or more and 10.00 or less from the viewpoints that the total amount of the uncondensed sites derived from the component (A) and the component (B) can be decreased; and that a more excellent crack suppressing effect is revealed. When the value of the blending ratio (molar ratio) of the tetrafunctional silane-based compound (A) and the trifunctional silane-based compound (B) [(A)/(B)] is small, the blending amount of the component (A) that is tetrafunctional becomes low, and therefore, it may be considered that the number of reaction sites which possibly become the uncondensed sites after the reaction can be suppressed, and the number of uncondensed sites remaining in the resulting antifouling layer can be suppressed. On the other hand, the present inventors have also found out that when the value of the foregoing blending ratio (molar ratio) [(A)/(B)] is made excessively small, the increased reaction rate between the component (A) and the component (B) starts to decrease. From such viewpoints, the foregoing blending ratio (molar ratio) [(A)/(B)] is more preferably 0.05 or more and 8.00 or less, and still more preferably 0.10 or more and 7.00 or less.

In the case where R³ in the formula (b) is a methyl group, from the viewpoint that a more excellent crack suppressing effect is obtained, the foregoing blending ratio (molar ratio) [(A)/(B)] is preferably 0.05 or more, more preferably 0.10 or more, still more preferably 0.15 or more, and yet still more preferably 0.20 or more; and from the same viewpoint, it is preferably 5.00 or less, more preferably 4.00 or less, still more preferably 1.50 or less, yet still more preferably 1.10 or less, even yet still more preferably 0.90 or less, and even still more further preferably 0.75 or less.

In the case where R³ in the formula (b) is an ethyl group, from the viewpoint that curability and a more excellent crack suppressing effect of the antifouling layer are obtained, the foregoing blending ratio (molar ratio) [(A)/(B)] is preferably 0.10 or more, more preferably 0.20 or more, still more preferably 0.45 or more, yet still more preferably 0.75 or more, and even yet still more preferably 0.90 or more; and from the viewpoint of obtaining a more excellent crack suppressing effect, it is preferably 7.00 or less, more preferably 5.00 or less, still more preferably 3.00 or less, and yet still more preferably 2.50 or less.

### <Component (C): Metal Catalyst>

The antifouling composition of the present invention includes a metal catalyst (C) containing a titanium atom, which does not require light irradiation for revealing a catalytic action.

In the present specification, "the metal catalyst which does not require light irradiation for revealing a catalytic action" indicates a metal catalyst which does not require light irradiation for revealing a catalytic action relative to the condensation reaction between the component (A) and the component (B). Metal catalysts generally called photocatalysts, for example, titanium oxide (TiO₂), zinc oxide (ZnO), etc., which require light irradiation for revealing a catalytic action, such as occurrence of oxidation reaction and reduction reaction due to production of an electron and a hole upon light irradiation, are excluded.

In the case where the antifouling layer contains a photocatalyst, there is a concern that problems, for example, lowering of water repellency to be caused due to the matter that since the photocatalyst itself is a solid, the surface roughness becomes large; lowering of water repellency to be caused due to a hydrophilicity giving effect of the photocatalyst; and lowering of durability to be caused due to promotion of hydrolysis of a polymer of a silane-based compound, are generated.

When the antifouling composition of the present invention includes the metal catalyst (C) of such a specified kind, the condensation reaction between the component (A) and the component (B) is effectively promoted, whereby the curability of the antifouling layer formed of the antifouling composition can be improved.

By providing the antifouling composition including the component (C) together with the component (A) and the component (B), the curing reaction can be made to proceed even at a relatively low temperature (130°C or lower). Accordingly, even in the case where an antifouling layer formed of the foregoing antifouling composition is formed on a substrate with low heat resistance, such as polyvinyl chloride, the antifouling layer can be formed even in an environment of a low temperature at which heat shrinkage of the substrate may be suppressed.

The titanium-based catalyst may be a compound other than a photocatalyst containing a titanium atom, and examples thereof include a titanium alkoxide, a titanium chelate, a titanium acylate, and the like. The titanium-based catalyst may also be a hydroxide, an acetate, a carbonate, a sulfate, a nitrate, a chloride, or the like of titanium.

Examples of the titanium alkoxide include titanium tetraisopropoxide, titanium tetra-n-butoxide, a titanium butoxide dimer, titanium tetra-2-ethylhexoxide, and the like.

Examples of the titanium chelate include a titanium acetylacetonate, such as titanium diisopropoxy bis(acetylacetonate), and titanium tetracetylacetonate; a titanium ethylacetoacetate, such as titanium diisopropoxy bis(ethylacetoacetate); a titanium triethanol aminate, such as titanium diisopropoxy bis(triethanolaminate); a titanium octylene glyconate, such as titanium tetraoctylene glyconate, titanium dioctyloxy bis(octylene glyconate), and titanium di-2-ethylhexoxy bis(2-ethyl-3-hydroxyhexoxide); titanium lactate, a titanium lactate ammonium salt, and the like.

Examples of the titanium acylate include polyhydroxytitanium stearate and the like.

The metal catalyst (C) contains at least the titanium-based catalyst from the viewpoint of effectively promoting the condensation reaction between the silane-based compounds to improve the curability of the antifouling layer formed of the antifouling composition as well as the viewpoint of providing the antifouling composition capable of making the curing reaction proceed even in an environment of a relatively low temperature (130°C or lower).

The titanium-based catalyst is preferably a titanium chelate; more preferably titanium ethylacetoacetate, titanium acetylacetonate, or titanium octylene glyconate; still more preferably titanium ethylacetoacetate; and yet still more preferably titanium diisopropoxy bis(ethylacetoacetate).

The content of the component (C) in the antifouling composition is preferably 0.010 to 50.000 mol%, more preferably 0.100 to 30.000 mol%, still more preferably 0.150 to 20.000 mol%, yet still more preferably 0.300 to 10.000 mol%, even yet still more preferably 0.500 to 6.000 mol%, and even still more further preferably 1.000 to 3.000 mol% based on 100 mol% of the sum total of the component (A) and the component (B) from the viewpoint of improving the curability of the antifouling layer formed of the antifouling composition as well as the viewpoint of providing the antifouling composition capable of making the curing reaction proceed even in an environment of a relatively low temperature (130°C or lower).

### <Component (D): Acid Catalyst>

Preferably, the antifouling composition of the present invention further includes an acid catalyst (D) from the viewpoint of more improving the curability of the antifouling layer formed of the antifouling composition.

When the acid catalyst (D) is contained in the antifouling composition, the hydrolysis of the reactive functional groups which the component (A) and the component (B) have is promoted, and the condensation reaction between the silane-based compounds is more promoted, thereby enabling one to form the antifouling layer with excellent curability.

The acid catalyst (D) is not particularly limited so long as it is a component having an action to promote the hydrolysis of the reactive functional groups of the component (A) and the component (B). From the viewpoint of more improving the curability of the antifouling layer formed of the antifouling composition, it is preferred to contain one or more acid catalysts selected from the group consisting of hydrochloric acid, phosphoric acid, acetic acid, formic acid, sulfuric acid, methanesulfonic acid, oxalic acid, p-toluenesulfonic acid, and trifluoroacetic acid, and it is more preferred to contain hydrochloric acid.

The content of the component (D) in the antifouling composition is preferably 0.001 to 1.000 mol%, more preferably 0.005 to 0.500 mol%, still more preferably 0.010 to 0.100 mol%, and yet still more preferably 0.020 to 0.070 mol% based on 100 mol% of the sum total of the component (A) and the component (B) from the viewpoint of more improving the curability of the antifouling layer formed of the antifouling composition.

### <Other Additives>

The antifouling composition may further contain any other additive than the aforementioned components (A) to (D) within a range where the advantageous effects of the present invention are not impaired.

Examples of other additives include a resin component, a curing agent, an antioxidant, a light stabilizer, a flame retardant, an electroconductive agent, an antistatic agent, a plasticizer, and the like.

The content of each of these additives is preferably 0 to 20% by mass, more preferably 0 to 10% by mass, still more preferably 0 to 5% by mass, and yet still more preferably 0 to 2% by mass relative to the total amount of the antifouling composition.

The total content of the component (A), the component (B), and the component (C) in the antifouling composition is 65% by mass or more, still more preferably 80% by mass or more, and yet still more preferably 90% by mass or more, and preferably 99.9% by mass or less, and more preferably 99.0% by mass or less relative to the total amount (100% by mass of the solids content) of the antifouling composition.

### [Antifouling Sheet]

The antifouling sheet of the present invention is not particularly limited so long as it is a sheet having the antifouling layer formed of the aforementioned antifouling composition of the present invention.

### <Configuration of Antifouling Sheet>

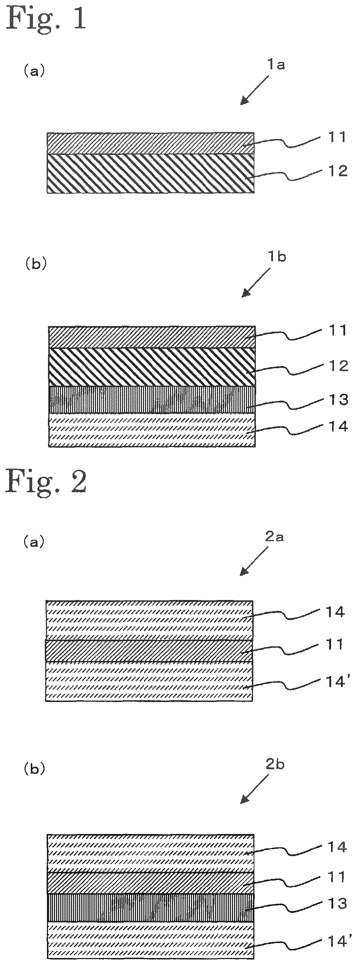

Fig. 1 illustrates cross-sectional views of antifouling sheets each having a substrate, as an embodiment of the present invention.

As the antifouling sheet having a substrate, there is exemplified an antifouling sheet 1a having an antifouling layer 11 on a substrate 12 as shown in (a) of Fig. 1.

In addition, the antifouling sheet may also be an antifouling sheet 1b in which a pressure sensitive adhesive layer 13 and a release material 14 are further provided on the surface opposite to that having the antifouling layer 11 of the substrate 12 as shown in (b) of Fig. 1.

In order to protect the antifouling layer 11 at the time of storage, a release material may be further provided on the antifouling layer 11 of this antifouling sheet 1a or 1b.

Fig. 2 illustrates cross-sectional views of antifouling sheets each not having a substrate, as an embodiment of the present invention.

As the antifouling sheet not having a substrate, there is exemplified an antifouling sheet 2a having a configuration in which the antifouling layer 11 is sandwiched between two release materials 14 and 14' as shown in (a) of Fig. 2.

In addition, the antifouling sheet may also be an antifouling sheet 2b in which the pressure sensitive adhesive layer 13 is further provided between the antifouling layer 11 and the release material 14' as shown in (b) of Fig. 2.

### <Antifouling Layer>

The antifouling layer which the antifouling sheet of the present invention has is formed of the antifouling composition of the present invention. The thickness of the antifouling layer is preferably 0.001 to 40 µm, more preferably 0.005 to 25 µm, still more preferably 0.01 to 15 µm, and yet still more preferably 0.05 to 5 µm from the viewpoint of providing the antifouling sheet having a large slip acceleration for water droplets, so that it has excellent water repellency that makes water droplets slip off instantly,.

### <Substrate>

Examples of the substrate which is used for the antifouling sheet of the present invention include a paper substrate, a resin film or sheet, a substrate prepared by laminating a paper substrate with a resin, and the like, and can be suitably selected in accordance with an application of the antifouling sheet.

Examples of the paper that constitutes a paper substrate include thin paper, wood containing paper, wood-free paper, impregnated paper, coated paper, art paper, vegetable parchment, glassine paper, and the like.

Examples of the resin that constitutes a resin film or sheet include polyolefin resins, such as polyethylene, and polypropylene; vinyl-based resins, such as polyvinyl chloride, polyvinylidene chloride, polyvinyl alcohol, an ethylene-vinyl acetate copolymer, an ethylene-vinyl alcohol copolymer, and an ethylene-methacrylic acid copolymer; polyester-based resins, such as polyethylene terephthalate, polybutylene terephthalate, and polyethylene naphthalate; polystyrene; an acrylonitrile-butadiene-styrene copolymer; cellulose triacetate; a polycarbonate; urethane resins, such as polyurethane, and acryl-modified polyurethane; and the like.

Examples of the substrate prepared by laminating a paper substrate with a resin include laminate papers prepared by laminating the aforementioned paper substrate with a thermoplastic resin, such as polyethylene; and the like.

Among these substrates, a resin film or sheet is preferred, a film or sheet formed of a polyester-based resin is more preferred, and a film or sheet formed of polyethylene terephthalate (PET) is still more preferred.

As the substrate which is used in the present invention, a primer layer-provided substrate in which a primer layer is provided on the surface of the aforementioned substrate may also be used from the viewpoint of improving the adhesiveness thereof to the antifouling layer or a weather-resistant layer as mentioned later.

Examples of the component that constitutes the primer layer include a polyester-based resin, a urethane-based resin, a polyester urethane-based resin, an acrylic resin, and the like. These resins may be used either alone or in combination of two or more thereof.

As the substrate which is used in the present invention, a weather-resistant layer-provided substrate in which a weather-resistant layer composed of a polymeric UV ray absorbent is further provided on the surface of the aforementioned substrate or the surface of the primer layer-provided substrate (a primer layer may be provided between the weather-resistant layer and the substrate) may also be used. The polymeric UV ray absorbent is one having a structure in which ultraviolet absorbing skeletons are covalent-bonded within the polymer structure, and its weight average molecular weight is preferably 5,000 or more, and more preferably 10,000 or more.

In the case where the substrate which is used in the present invention is a resin film or sheet, the surface of such a resin film or sheet may be subjected to a surface treatment, such as an oxidation method, and a roughening method, as the need arises, from the viewpoint of improving the adhesiveness thereof to the antifouling layer.

The oxidation treatment is not particularly limited, and examples thereof include a corona discharge treatment method, a plasma treatment method, chromic acid oxidation (wet), a flame treatment, a hot blast treatment, an ozone-UV ray irradiation treatment, and the like.

The roughening method is not particularly limited, and examples thereof include a sand blast method, a solvent treatment method, and the like.

Though such a surface treatment is suitably selected according to the kind of the substrate, a corona discharge treatment method is preferred from the viewpoint of improving the adhesiveness to the antifouling layer as well as the viewpoint of operability.

Though the thickness of the substrate is suitably selected according to an application of the antifouling sheet, it is preferably 10 to 250 µm, more preferably 15 to 200 µm, and still more preferably 20 to 150 µm from the viewpoints of handleability and economic efficiency.

The substrate which is used in the present invention may further contain a UV ray absorbent other than the aforementioned polymeric UV ray absorbent, a light stabilizer, an antioxidant, an antistatic agent, a slip agent, an antiblocking agent, a colorant, or the like.

### <Release Material>

As the release material which is used in the present invention, a release sheet prepared through a double-side release treatment, a release sheet prepared through a single-side release treatment, and the like are usable, and examples thereof include one prepared by coating a substrate for release material with a release agent and the like.

Examples of the substrate for release material include the paper substrate, the resin film or sheet, the substrate prepared by laminating a paper substrate with a resin, each being usable as the substrate which the antifouling sheet of the present invention has, and the like.

Examples of the release agent include a silicone-based resin, an olefin-based resin, an isoprene-based resin, a rubber-based elastomer, such as a butadiene-based resin, a long-chain alkyl-based resin, an alkyd-based resin, a fluororesin, and the like.

Though the thickness of the release material is not particularly limited, it is preferably 10 to 200 µm, and more preferably 25 to 150 µm.

### <Pressure Sensitive Adhesive Layer>

In the case where the antifouling sheet of the present invention has a pressure sensitive adhesive layer, the pressure sensitive adhesive that constitutes the pressure sensitive adhesive layer can be suitably selected according to an application of the antifouling sheet.

Specifically, examples of the pressure sensitive adhesive include an acrylic pressure sensitive adhesive, a urethane-based pressure sensitive adhesive, a silicone-based pressure sensitive adhesive, a rubber-based pressure sensitive adhesive, a polyester-based pressure sensitive adhesive, a UV ray-curable type pressure sensitive adhesive, and the like.

These pressure sensitive adhesives may be used either alone or in combination of two or more thereof.

Though the thickness of the pressure sensitive adhesive layer is not particularly limited, it is preferably 1 to 100 µm, and more preferably 5 to 80 µm.

### [Production Method of Antifouling Sheet]

The method for producing an antifouling sheet of the present invention includes the following steps (1) and (2):
Step (1): a step of preparing an antifouling composition including
a tetrafunctional silane-based compound (A) represented by the following formula (a):

   Formula (a): Si(OR¹)ₚ(X¹)₄₋ₚ

   wherein,
R¹ represents an alkyl group having 1 to 6 carbon atoms; X¹ represents a halogen atom; when plural R¹s and X¹s are present, the plural R¹s and X¹s may be the same as or different from each other; and p represents an integer of 0 to 4,
a trifunctional silane-based compound (B) represented by the following formula (b):

   Formula (b): R²Si(OR³)_{q}(X²)_{3-q}

   wherein,
R² represents an alkyl group having 1 to 3 carbon atoms; R³ represents an alkyl group having 1 to 6 carbon atoms; X² represents a halogen atom; when plural R³s and X²s are present, the plural R³s and X²s may be the same as or different from each other; and q represents an integer of 0 to 3, and
a metal catalyst (C) containing one or more metal atoms selected from titanium, aluminum, and zinc, which does not require light irradiation for revealing a catalytic action; and
Step (2): a step of coating the antifouling composition on a substrate or a release material, followed by drying to form an antifouling layer.

Preferably, in the case of coating the antifouling composition of the present invention, the antifouling composition of the present invention is dissolved in an organic solvent and coated in a form of solution onto the substrate or release material by a known coating method.

Examples of the solvent include methanol, ethanol, propanol, butanol, isopropyl alcohol, methyl ethyl ketone, methyl isobutyl ketone, ethyl acetate, toluene, and the like.

Examples of the coating method include a spin coating method, a spray coating method, a bar coating method, a knife coating method, a roll knife coating method, a roll coating method, a blade coating method, a die coating method, a gravure coating method, and the like.

After forming the coating film, the drying temperature and drying time of the coating film are not particularly limited and can be suitably set.

However, according to the antifouling composition of the present invention, the curing reaction can be made to proceed even in an environment of a relatively low temperature as 130°C or lower, and in the case using a substrate with low heat resistance, such as polyvinyl chloride, heat shrinkage of the substrate can be suppressed.

Accordingly, the drying temperature is preferably 10 to 130°C, more preferably 20 to 120°C, still more preferably 40 to 110°C, and yet still more preferably 50 to 95°C from the aforementioned viewpoints as well as the viewpoint of productivity.

In order to protect the surface of the antifouling layer at the time of storage, the release material may be further laminated on the formed antifouling layer.

Furthermore, by sticking a pressure sensitive adhesive layer formed on another release material onto the formed antifouling layer, a pressure sensitive adhesive layer-provided antifouling sheet can also be produced as in the antifouling sheet 1b of (b) of Fig. 1 or the antifouling sheet 2b of (b) of Fig. 2.

### Examples

### Examples 1 to 11 and Comparative Examples 1 to 6

### (1) Preparation of Antifouling Composition

The component (A) and the component (B) of the kind and blending ratio (active component ratio, mol%) shown in Table 1 were blended, and ethanol was added to dilute the blend, thereby obtaining a solution having an active component concentration of 1.8 M. The resulting solution was further blended with the component (D) and stirred for one minute. After stirring, the resultant was allowed to stand for 15 minutes.

Subsequently, the component (C) of the kind and blending ratio (active component ratio, mol%) shown in Table 1 was blended to prepare a solution of an antifouling composition. (2) Production of Antifouling Sheet

A weather-resistant layer-provided substrate prepared by further coating, as a weather-resistant layer, a polymeric UV ray absorbent (trade name "ULS-935LH, manufactured by Ipposha Oil Industries Co., Ltd.) in a thickness of 5 µm on a primer layer of a polyethylene terephthalate (PET) film having a primer layer provided on one surface thereof (trade name "Tetron Film HB3" having a thickness of 50 µm, manufactured by Teijin DuPont Films Japan Limited) by means of bar coating was used as a substrate.

On the weather-resistant layer of the foregoing weather-resistant layer-provided substrate, the above-prepared solution of antifouling composition was coated using a Mayer bar, thereby forming a coating film.

Subsequently, the coating film was dried at 80°C for 2 minutes, thereby fabricating an antifouling sheet having an antifouling layer having a thickness shown in Table 1.

Details of the respective components used on the occasion of preparing the antifouling composition in each of the Examples and Comparative Examples, are as follows.

### <Tetrafunctional Silane-based Compound>

- "TEOS": Tetraethoxysilane that is the tetrafunctional silane-based compound represented by the foregoing formula (a) wherein p is 4, and R¹ is an ethyl group (carbon number: 2)

### <Trifunctional Silane-based Compound>

- "Methyltrimethoxysilane": Trifunctional silane-based compound represented by the foregoing formula (b) wherein q is 3, R² is a methyl group (carbon number: 1), and R³ is a methyl group (carbon number: 1)
- "Methyltriethoxysilane": Trifunctional silane-based compound represented by the foregoing formula (b) wherein q is 3, R² is a methyl group (carbon number: 1), and R³ is an ethyl group (carbon number: 2)
- "Ethyltrimethoxysilane": Trifunctional silane-based compound represented by the foregoing formula (b) wherein q is 3, R² is an ethyl group (carbon number: 2), and R³ is a methyl group (carbon number: 1)
- "Decyltriethoxysilane": Trifunctional silane-based compound represented by the foregoing formula (b) wherein q is 3, R² is a n-decyl group (carbon number: 10), and R³ is an ethyl group (carbon number: 2)
- "Hexyltrimethoxysilane": Trifunctional silane-based compound represented by the foregoing formula (b) wherein q is 3, R² is a n-hexyl group (carbon number: 6), and R³ is a methyl group (carbon number: 1)

### <Metal-based Catalyst>

- "Titanium-based catalyst": Trade name "ORGATIX TC-750" for titanium diisopropoxy bis(ethylacetoacetate), manufactured by Matsumoto Fine Chemical Co., Ltd.
- "Tin-based catalyst": Dibutyltin dilaurate

### <Acid Catalyst>

- "Hydrochloric acid": 0.01M hydrochloric acid

The antifouling layer formed of the antifouling composition prepared in each of the Examples and Comparative Examples was evaluated for the characteristics thereof, according to the methods mentioned below. The results are shown in Table 1.

### <Thickness of Antifouling Layer>

The thickness of the antifouling layer was measured with a spectroscopic ellipsometer (trade name: "M-2000", manufactured by J. A. Woollam Co., Inc.).

### <Surface State of Antifouling Layer>

The surface of the antifouling layer of the antifouling sheet fabricated in each of the Examples and Comparative Examples was visually observed, and the surface state of the antifouling layer was evaluated according to the following criteria.

A: The surface of the antifouling layer was transparent.

F: The surface of the antifouling layer was not transparent.

The antifouling sheets given the evaluation of "F" regarding the surface state of antifouling layer were not on a usable level, and therefore, they were not evaluated in point of the following "weather resistance of antifouling layer" (evaluations of "crack suppressing effect" and "water repellency maintaining effect").

### <Curability of Antifouling Layer>

The surface of the antifouling layer of the antifouling sheet fabricated in each of the Examples and Comparative Examples was rubbed 20 times with a finger and then visually observed, and the curability of the antifouling layer was evaluated according to the following criteria.
A: There was seen no change in the color as compared with that before rubbing the antifouling layer with a finger.
B: The color was slightly changed white, but the change was on an acceptable level.
C: The color was changed white.
D: The coating film formed of the antifouling composition was not cured, so that an antifouling layer could not be formed.

The antifouling sheets given the evaluation of "C" or "D" regarding the curability of the antifouling layer were not on a usable level, and therefore, they were not evaluated in point of the following "weather resistance of antifouling layer" ("crack suppressing effect" and "water repellency maintaining effect").

### <Weather Resistance of Antifouling Layer>

### (Exposure Treatment Condition)

The antifouling layer of the antifouling sheet fabricated in each of the Examples and Comparative Examples was irradiated with a light close to the entire wavelength region of sunlight by a xenon (Xe) lamp at an intensity of 60 W/m² by using a weather resistance testing machine, manufactured by Suga Test Instruments Co., Ltd. (trade name: "Super Xenon Weather Meter SX75") under the following condition.
- Total exposure time: 1,000 hours

- Atmosphere at 43°C and 100% RH (relative humidity)

- Rainfall condition of 18 minutes per 2 hours

The antifouling sheet fabricated in each of the Examples and Comparative Examples as exposed under the condition supposing the case of long-term outdoor exposure was evaluated as follows.

### (Crack Suppressing Effect)

The surface of the antifouling layer of the antifouling sheet after exposure under the aforementioned exposure treatment condition was observed by visual inspection and an optical interference surface topography measuring system manufactured by Veeco Instruments Inc. (trade name: "Wyko NT-1100", observation by a microscope), thereby evaluating the crack suppressing effect.
A: A crack was not confirmed by both visual inspection and microscopic observation.
B: Although a crack was not confirmed by visual inspection, the crack was confirmed by microscopic observation.
C: A crack was slightly confirmed by visual inspection.
D: Although a crack was confirmed by visual inspection, it was suppressed as compared with the E evaluation (corresponding to Comparative Example 1).
E: A distinct crack the same as in Comparative Example 1 was confirmed by visual inspection.

### (Water Repellency Maintaining Effect)

With respect to the surface of the antifouling layer of the antifouling sheet before and after exposure for 1,000 hours using an automatic contact angle meter, manufactured by Kyowa Interface Science Co., Ltd. (trade name: "DM-701"), a difference in the contact angle against 2 µL of water was measured to evaluate the water repellency maintaining effect. The smaller the decrease of the water contact angle before and after the exposure under the aforementioned exposure treatment condition, the more excellent the water repellency maintaining effect is.
A: The decrease of the water contact angle before and after the exposure was 20° or less.
B: The decrease of the water contact angle before and after the exposure was more than 20° and 25° or less.
C: The decrease of the water contact angle before and after the exposure was more than 25° and 30° or less.
D: The decrease of the water contact angle before and after the exposure was more than 30°.

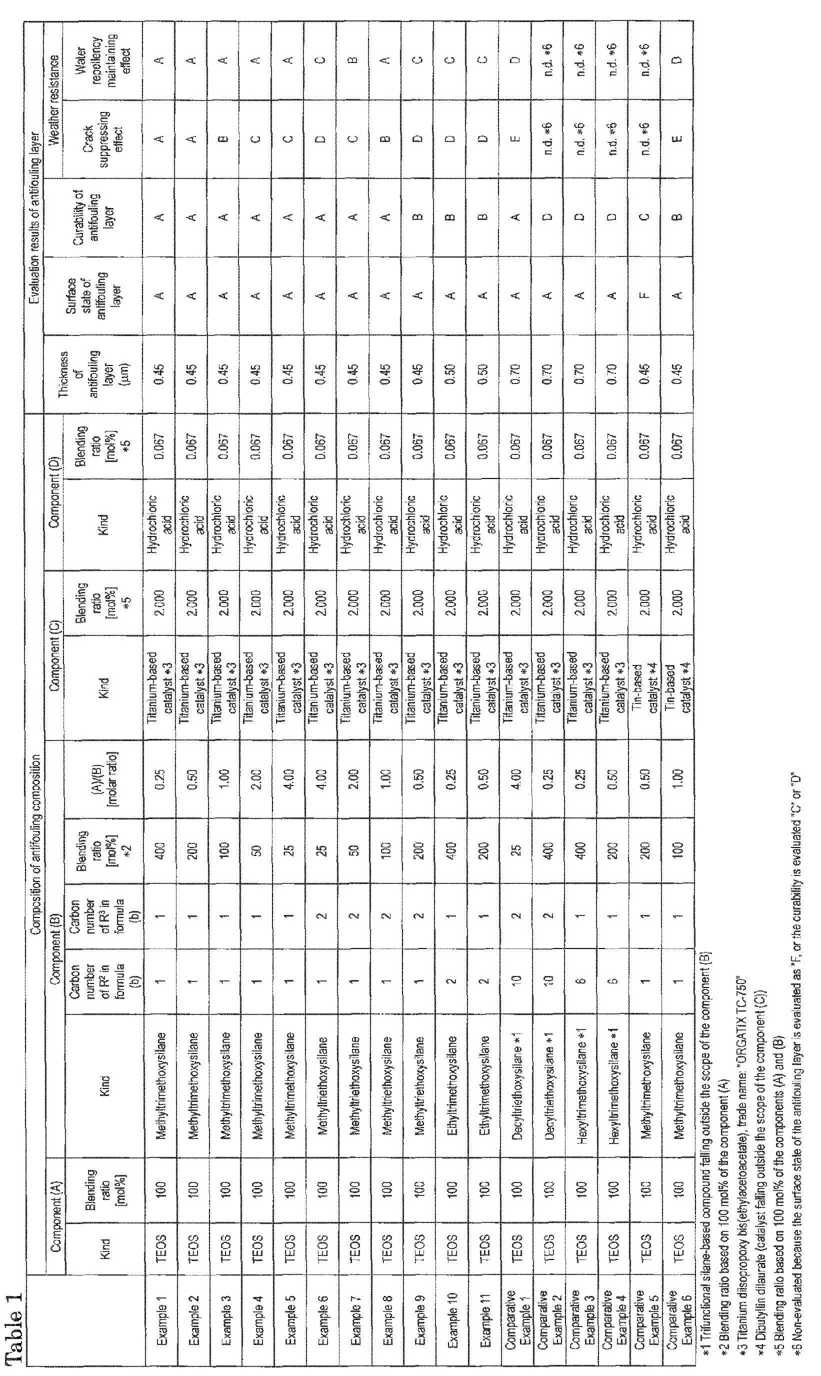

From Table 1, the antifouling layer formed of the antifouling composition of each of Examples 1 to 11 was favorable in the surface state and the curability. In addition, it was confirmed that the antifouling layer formed of the antifouling composition of each of Examples 1 to 11 was also excellent in the crack suppressing effect and the water repellency maintaining effect on the occasion of exposure under the aforementioned exposure treatment condition.

On the other hand, though the antifouling layer formed of the antifouling composition of each of Comparative Examples 1 and 6 was favorable in the surface state and the curability, there were revealed such results that it was inferior in the crack suppressing effect and the water repellency maintaining effect on the occasion of exposure under the aforementioned exposure treatment condition. In addition, in the antifouling layer formed of the antifouling composition of each of Comparative Examples 2 to 4, there were revealed such results that the curability was inferior. Accordingly, it was judged that the antifouling sheets having such an antifouling layer were useless, and therefore, the antifouling layers were not evaluated for the crack suppressing effect and the water repellency maintaining effect on the occasion of exposure under the aforementioned exposure treatment condition.

In addition, there were revealed such results that the antifouling layer formed of the antifouling composition of Comparative Example 5 was inferior in the surface state and the curability. Accordingly, it was judged that the antifouling sheet having the antifouling layer of Comparative Example 5 was useless, and therefore, the antifouling layer was not evaluated for the crack suppressing effect and the water repellency maintaining effect on the occasion of exposure under the aforementioned exposure treatment condition.

### Industrial Applicability

The antifouling layer formed of the antifouling composition of the present invention is favorable in the surface state and the curability and also excellent in the crack suppressing effect and the water repellency maintaining effect under the condition supposing the case of long-term outdoor exposure.

Accordingly, the antifouling sheet including the antifouling layer of the present invention is suitable, for example, as an antifouling sheet for preventing water droplets, stains, and the like that may hinder vision, from adhering to the surfaces of windows for buildings, windows for automobiles, windshields for cars, airplanes, ships, and the like, aquariums, ship bottom windows, undersea lives adhesion preventing films for ship bottoms, road panels such as soundproof walls, mirrors installed in bathrooms or the like, and molded articles, such as glass chambers, and glass accessories. The antifouling sheet including the antifouling layer of the present invention is more suitable in the case of being used for an application to be used in the environment exposed to sunlight in the outdoor over a long period of time, such as windows for automobiles, and windshields for cars, airplanes, ships, etc.

### Reference Signs List

1a, 1b, 2a, 2b: Antifouling sheet
11: Antifouling layer
12: Substrate
13: Pressure sensitive adhesive layer
14, 14': Release material

## Claims

1. An antifouling composition comprising:
a tetrafunctional silane-based compound (A) represented by the following formula (a):
Formula (a): Si(OR¹)ₚ(X¹)₄₋ₚ
wherein,
R¹ represents an alkyl group having 1 to 6 carbon atoms; X¹ represents a halogen atom; when plural R¹s and X¹s are present, the plural R¹s and X¹s may be the same as or different from each other; and p represents an integer of 0 to 4,
a trifunctional silane-based compound (B) represented by the following formula (b):
Formula (b): R²Si(OR³)_{q}(X²)_{3-q}
wherein,
R² represents an alkyl group having 1 to 3 carbon atoms; R³ represents an alkyl group having 1 to 6 carbon atoms; X² represents a halogen atom; when plural R³s and X²s are present, the plural R³s and X²s may be the same as or different from each other; and q represents an integer of 0 to 3, and
a metal catalyst (C) containing a titanium atom, which does not require light irradiation for revealing a catalytic action,
wherein the total content of the component (A), the component (B), and the component (C) is 65 % by mass or more relative to the total amount (100 % by mass of the solids content) of the antifouling composition.

2. The antifouling composition according to claim 1, wherein a blending ratio (molar ratio) of the component (A) and the component (B) [(A)/(B)] is 0.01 or more and 10.00 or less.

3. The antifouling composition according to claim 1 or 2, wherein R³ in the formula (b) is a methyl group.

4. The antifouling composition according to claim 3, wherein a blending ratio (molar ratio) of the component (A) and the component (B) [(A)/(B)] is 0.05 or more and 5.00 or less.

5. The antifouling composition according to claim 1 or 2, wherein R³ in the formula (b) is an ethyl group.

6. The antifouling composition according to claim 5, wherein a blending ratio (molar ratio) of the component (A) and the component (B) [(A)/(B)] is 0.10 or more and 7.00 or less.

7. The antifouling composition according to any one of claims 1 to 6, wherein the content of the component (C) is 0.010 to 50.000 mol% based on 100 mol% of the sum total of the component (A) and the component (B), and wherein the component (C) includes one or more selected from a titanium alkoxide, a titanium chelate, and a titanium acylate.

8. The antifouling composition according to any one of claims 1 to 7, wherein the total content of the component (A), the component (B), and the component (C) is 80% by mass or more relative to the total amount (100 % by mass of the solids content) of the antifouling composition.

9. The antifouling composition according to any one of claims 1 to 8, further comprising an acid catalyst (D).

10. The antifouling composition according to claim 9, wherein the component (D) includes one or more selected from the group consisting of hydrochloric acid, phosphoric acid, acetic acid, formic acid, sulfuric acid, methanesulfonic acid, oxalic acid, p-toluenesulfonic acid, and trifluoroacetic acid.

11. An antifouling sheet comprising an antifouling layer formed of the antifouling composition according to any one of claims 1 to 10.

12. The antifouling sheet according to claim 11, comprising the antifouling layer on a substrate.

13. The antifouling sheet according to claim 11 or 12, further comprising a pressure sensitive adhesive layer.

14. A method for producing an antifouling sheet, comprising the following steps (1) and (2):
Step (1): a step of preparing an antifouling composition comprising:
a tetrafunctional silane-based compound (A) represented by the following formula (a):
Formula (a): Si(OR¹)ₚ(X¹)₄₋ₚ
wherein,
R¹ represents an alkyl group having 1 to 6 carbon atoms; X¹ represents a halogen atom; when plural R¹s and X¹s are present, the plural R¹s and X¹s may be the same as or different from each other; and p represents an integer of 0 to 4,
a trifunctional silane-based compound (B) represented by the following formula (b):
Formula (b): R²Si(OR³)_{q}(X²)_{3-q}
wherein,
R² represents an alkyl group having 1 to 3 carbon atoms; R³ represents an alkyl group having 1 to 6 carbon atoms; X² represents a halogen atom; when plural R³s and X²s are present, the plural R³s and X²s may be the same as or different from each other; and q represents an integer of 0 to 3, and
a metal catalyst (C) containing a titanium atom, which does not require light irradiation for revealing a catalytic action,
wherein the total content of the component (A), the component (B), and the component (C) is 65 % by mass or more relative to the total amount (100 % by mass of the solids content) of the antifouling composition, and
Step (2): a step of coating the antifouling composition on a substrate or a release material, followed by drying to form an antifouling layer.

15. An antifouling sheet obtained by the production method according to claim 14.

## Patentansprüche

1. Eine Antifoulingzusammensetzung, umfassend:
eine tetrafunktionelle Verbindung auf Silanbasis (A), dargestellt durch die folgende Formel (a):
Formel (a): Si(OR¹)ₚ(X¹)₄₋ₚ
wobei,
R¹ eine Alkylgruppe mit 1 bis 6 Kohlenstoffatomen darstellt; X¹ ein Halogenatom darstellt; wenn mehrere R¹ und X¹ vorhanden sind, können die mehreren R¹ und X¹ gleich oder verschieden voneinander sein; und p eine ganze Zahl von 0 bis 4 darstellt,
eine trifunktionelle Verbindung auf Silanbasis (B), dargestellt durch die folgende Formel (b):
Formel (b): R²Si(OR³)_{q}(X²)_{3-q}
wobei,
R² eine Alkylgruppe mit 1 bis 3 Kohlenstoffatomen darstellt; R³ eine Alkylgruppe mit 1 bis 6 Kohlenstoffatomen darstellt; X² ein Halogenatom darstellt; wenn mehrere R³ und X² vorhanden sind, können die mehreren R³ und X² gleich oder verschieden voneinander sein; und q eine ganze Zahl von 0 bis 3 darstellt, und
einen Metallkatalysator (C), der ein Titanatom enthält, der keine Lichtbestrahlung benötigt, um eine katalytische Wirkung zu zeigen,
wobei der Gesamtgehalt der Komponente (A), der Komponente (B) und der Komponente (C) 65 Massenprozent oder mehr, bezogen auf die Gesamtmenge (100 Massenprozent des Feststoffgehalts) der Antifoulingzusammensetzung, beträgt.

2. Die Antifoulingzusammensetzung nach Anspruch 1, wobei ein Mischungsverhältnis (Molverhältnis) der Komponente (A) und der Komponente (B) [(A)/(B)] 0,01 oder mehr und 10,00 oder weniger beträgt.

3. Die Antifoulingzusammensetzung nach Anspruch 1 oder 2, wobei R³ in der Formel (b) eine Methylgruppe ist.

4. Die Antifoulingzusammensetzung nach Anspruch 3, wobei ein Mischungsverhältnis (Molverhältnis) der Komponente (A) und der Komponente (B) [(A)/(B)] 0,05 oder mehr und 5,00 oder weniger beträgt.

5. Die Antifoulingzusammensetzung nach Anspruch 1 oder 2, wobei R³ in der Formel (b) eine Ethylgruppe ist.

6. Die Antifoulingzusammensetzung nach Anspruch 5, wobei ein Mischungsverhältnis (Molverhältnis) der Komponente (A) und der Komponente (B) [(A)/(B)] 0,10 oder mehr und 7,00 oder weniger beträgt.

7. Die Antifoulingzusammensetzung nach einem der Ansprüche 1 bis 6, wobei der Gehalt der Komponente (C) 0,010 bis 50,000 Mol-%, bezogen auf 100 Mol-% der Gesamtsumme der Komponente (A) und der Komponente (B), beträgt, und wobei die Komponente (C) eine oder mehrere ausgewählt aus einem Titanalkoxid, einem Titanchelat und einem Titanacylat, enthält.

8. Die Antifoulingzusammensetzung nach einem der Ansprüche 1 bis 7, wobei der Gesamtgehalt der Komponente (A), der Komponente (B) und der Komponente (C) 80 Massenprozent oder mehr, bezogen auf die Gesamtmenge (100 Massenprozent des Feststoffgehalts) der Antifoulingzusammensetzung, beträgt.

9. Die Antifoulingzusammensetzung nach einem der Ansprüche 1 bis 8, ferner umfassend einen Säurekatalysator (D).

10. Die Antifoulingzusammensetzung nach Anspruch 9, wobei die Komponente (D) eine oder mehrere aus der Gruppe bestehend aus Salzsäure, Phosphorsäure, Essigsäure, Ameisensäure, Schwefelsäure, Methansulfonsäure, Oxalsäure, p-Toluolsulfonsäure und Trifluoressigsäure enthält.

11. Eine Antifouling-Folie, umfassend eine Antifouling-Schicht, gebildet aus der Antifoulingzusammensetzung nach einem der Ansprüche 1 bis 10.

12. Die Antifouling-Folie nach Anspruch 11, umfassend die Antifouling-Schicht auf einem Substrat.

13. Die Antifouling-Folie nach Anspruch 11 oder 12, die ferner eine Haftklebeschicht umfasst.

14. Ein Verfahren zur Herstellung einer Antifouling-Folie, umfassend die folgenden Schritte (1) und (2):
Schritt (1): ein Schritt der Herstellung einer Antifoulingzusammensetzung, umfassend:
eine tetrafunktionelle Verbindung auf Silanbasis (A), dargestellt durch die folgende Formel (a):
Formel (a): Si(OR¹)ₚ(X¹)₄₋ₚ
wobei,
R¹ eine Alkylgruppe mit 1 bis 6 Kohlenstoffatomen darstellt; X¹ ein Halogenatom darstellt; wenn mehrere R¹ und X¹ vorhanden sind, können die mehreren R¹ und X¹ gleich oder verschieden voneinander sein; und p eine ganze Zahl von 0 bis 4 darstellt,
eine trifunktionelle Verbindung auf Silanbasis (B), dargestellt durch die folgende Formel (b):
Formel (b): R²Si(OR³)_{q}(X²)_{3-q}
wobei,
R² eine Alkylgruppe mit 1 bis 3 Kohlenstoffatomen darstellt; R³ eine Alkylgruppe mit 1 bis 6 Kohlenstoffatomen darstellt; X² ein Halogenatom darstellt; wenn mehrere R³ und X² vorhanden sind, können die mehreren R³ und X² gleich oder verschieden voneinander sein; und q eine ganze Zahl von 0 bis 3 darstellt, und
einen Metallkatalysator (C), der ein Titanatom enthält, der keine Lichtbestrahlung benötigt, um eine katalytische Wirkung zu zeigen,
wobei der Gesamtgehalt der Komponente (A), der Komponente (B) und der Komponente (C) 65 Massenprozent oder mehr, bezogen auf die Gesamtmenge (100 Massenprozent des Feststoffgehalts) der Antifoulingzusammensetzung, beträgt, und
Schritt (2): ein Schritt des Auftragens der Antifoulingzusammensetzung auf ein Substrat oder ein Trennmaterial, gefolgt von einer Trocknung zur Bildung einer Antifouling-Schicht.

15. Eine Antifouling-Folie, erhalten durch das Herstellungsverfahren nach Anspruch 14.

## Revendications

1. Composition antisalissure comprenant :
un composé tétrafonctionnel à base de silane (A) représenté par la formule suivante (a) :
formule (a) : Si(OR¹)ₚ(X¹)₄₋ₚ
dans laquelle
R¹ représente un groupe alkyle ayant 1 à 6 atome(s) de carbone ; X¹ représente un atome d'halogène ; si plusieurs R¹ et plusieurs X¹ sont présents, les plusieurs R¹ et les plusieurs X¹ peuvent être identiques ou différents l'un de l'autre ; et p représente un nombre entier de 0 à 4,
un composé trifonctionnel à base de silane (B) représenté par la formule suivante (b) :
formule (b) : R²Si(OR³)_{q}(X²)_{3-q}
dans laquelle
R² représente un groupe alkyle ayant 1 à 3 atome(s) de carbone ; R³ représente un groupe alkyle ayant 1 à 6 atome(s) de carbone ; X² représente un atome d'halogène ; si plusieurs R³ et plusieurs X² sont présents, les plusieurs R³ et les plusieurs X² peuvent être identiques ou différents l'un de l'autre ; et q représente un nombre entier de 0 à 3, et
un catalyseur métallique (C) contenant un atome de titane, qui n'a pas besoin d'irradiation de lumière pour développer une action catalytique,
dans lequel la teneur totale en composant (A), en composant (B) et en composant (C) est 65 % en masse ou plus par rapport à la quantité totale (100 % en masse de la teneur en solides) de la composition antisalissure.

2. Composition antisalissure selon la revendication 1, dans laquelle un rapport de mélange (rapport molaire) du composant (A) et du composant (B) [(A)/(B)] est 0,01 ou plus et 10,00 ou moins.

3. Composition antisalissure selon la revendication 1 ou la revendication 2, dans laquelle R³ dans la formule (b) est un groupe méthyle.

4. Composition antisalissure selon la revendication 3, dans laquelle un rapport de mélange (rapport molaire) du composant (A) et du composant (B) [(A)/(B)] est 0,05 ou plus et 5,00 ou moins.

5. Composition antisalissure selon la revendication 1 ou la revendication 2, dans laquelle R³ dans la formule (b) est un groupe éthyle.

6. Composition antisalissure selon la revendication 5, dans laquelle un rapport de mélange (rapport molaire) du composant (A) et du composant (B) [(A)/(B)] est 0,10 ou plus et 7,00 ou moins.

7. Composition antisalissure selon l'une quelconque des revendications 1 à 6, dans laquelle la teneur en composant (C) est comprise entre 0,010 et 50,000 % molaire sur la base de 100 % molaire de la somme totale du composant (A) et du composant (B), et dans laquelle le composant (C) comprend un composé ou plusieurs composés sélectionné(s) parmi un alkoxyde de titane, un chélate de titane et un acylate de titane.

8. Composition antisalissure selon l'une quelconque des revendications 1 à 7, dans laquelle la teneur totale en composant (A), en composant (B) et en composant (C) est 80 % en masse ou plus par rapport à la quantité totale (100% en masse de la teneur en solides) de la composition antisalissure.

9. Composition antisalissure selon l'une quelconque des revendications 1 à 8, comprenant en outre un catalyseur acide (D).

10. Composition antisalissure selon la revendication 9, dans laquelle le composant (D) comprend un ou plusieurs acide(s) sélectionné(s) dans le groupe composé d'acide hydrochlorique, d'acide phosphorique, d'acide acétique, d'acide formique, d'acide sulfurique, d'acide méthane sulfonique, d'acide oxalique, d'acide p-toluène sulfonique et d'acide trifluoracétique.

11. Feuille antisalissure comprenant une couche antisalissure formée à partir de la composition antisalissure selon l'une quelconque des revendications 1 à 10.

12. Feuille antisalissure selon la revendication 11, comprenant la couche antisalissure sur un substrat.

13. Feuille antisalissure selon la revendication 11 ou la revendication 12, comprenant en outre une couche adhésive sensible à la pression.

14. Procédé de fabrication d'une feuille antisalissure, comprenant les étapes suivantes (1) et (2) :
étape (1): une étape de préparation d'une composition antisalissure comprenant :
un composé tétrafonctionnel à base de silane (A) représenté par la formule suivante (a) :
formule (a) : Si(OR¹)ₚ(X¹)₄₋ₚ
dans laquelle
R¹ représente un groupe alkyle ayant 1 à 6 atome(s) de carbone ; X¹ représente un atome d'halogène ; si plusieurs R¹ et plusieurs X¹ sont présents, les plusieurs R¹ et les plusieurs X¹ peuvent être identiques ou différents l'un de l'autre ; et p représente un nombre entier de 0 à 4,
un composé trifonctionnel à base de silane (B) représenté par la formule suivante (b) :
formule (b) : R²Si(OR³)_{q}(X²)_{3-q}
dans laquelle
R² représente un groupe alkyle ayant 1 à 3 atome(s) de carbone ; R³ représente un groupe alkyle ayant 1 à 6 atome(s) de carbone ; X² représente un atome d'halogène ; si plusieurs R³ et plusieurs X² sont présents, les plusieurs R³ et les plusieurs X² peuvent être identiques ou différents l'un de l'autre ; et q représente un nombre entier de 0 à 3, et
un catalyseur métallique (C) contenant un atome de titane, qui n'a pas besoin d'irradiation de lumière pour développer une action catalytique,
dans lequel la teneur totale en composant (A), en composant (B) et en composant (C) est 65 % en masse ou plus par rapport à la quantité totale (100 % en masse de la teneur en solides) de la composition antisalissure, et
étape (2) : une étape d'appliquer la composition antisalissure sur un substrat ou un matériau de séparation, suivie par un séchage pour former une couche antisalissure.

15. Feuille antisalissure obtenue par le procédé de fabrication selon la revendication 14.
